# EUROPÄISCHE PATENTSCHRIFT

(11) **EP 0 932 887 B1**
(45) Veröffentlichungstag und Bekanntmachung des Hinweises auf die Patenterteilung: **24.01.2001**
(21) Anmeldenummer: 96934511.5
(22) Anmeldetag: 01.10.1996
(51) Int. Cl.: G07G 1/00

(54) **Arbeitsplatz eines Warenabrechnungssystems**
Workstation of a commodity accounting system
Place de travail pour un système de comptabilisation de marchandises

(43) Veröffentlichungstag der Anmeldung: 04.08.1999
(73) Patentinhaber: Wincor Nixdorf GmbH & Co KG, 33106 Paderborn (DE)
(72) Erfinder: BAITZ, Günter, D-13503 Berlin (DE); BURCHART, Joachim, D-33189 Schlangen (DE); KAMIN, Hartmut, D-10585 Berlin (DE)
(86) Internationale Anmeldenummer: EP9604290
(87) Internationale Veröffentlichungsnummer: WO9731346

(56) Entgegenhaltungen:
- EP-A- 0 283 241
- EP-A- 0 349 997
- EP-A- 0 577 170
- WO-A-79/00514
- WO-A-90/00304
- DE-U- 9 117 108
- US-A- 4 208 081
- IBM TECHNICAL DISCLOSURE BULLETIN, Bd. 28, Nr. 6, November 1985, NEW YORK, US, Seiten 2361-2363, XP002009404 ANONYMOUS: "Keyboard Support Lifting Assembly With Locking Feature"

## Beschreibung

Die Erfindung betrifft einen Arbeitsplatz eines Warenabrechnungssystems nach dem Oberbegriff des Anspruchs 1.

An einen Arbeitsplatz eines Warenabrechnungssystems für Verkaufsgeschäfte werden je nach Einsatzfall unterschiedliche Anforderungen hinsichtlich ihrer Ausstattung und Bedienbarkeit gestellt. Unter dem Begriff "Arbeitsplatz" werden im folgenden sowohl von einem Kunden benutzte Selbstbedienungsplätze wie auch von Bedienkräften betriebene Gerätschaften wie freistehende oder in einen sogenannten Checkoutplatz integrierte Registrierkassen, Selbstbedienungswaagen, Bedienwaagen, Abpackwaagen und ähnliches subsumiert. Beispielsweise werden Selbstbedienungswaagen in Obst- und Gemüseabteilungen und Bedienwaagen von einer stehenden Person bedient, während eine Kassierperson in einem Verkaufsgeschäft eine Registrierkasse und eine dieser zugeordnete Checkoutwaage sitzend bedient. Bisher werden für die verschiedenen Einsatzfälle speziell konstruierte Arbeitsplätze verwendet, oder es werden autonome, häufig hinsichtlich ihren Abmessungen oder ihrer Formgestaltung nicht zueinander passende Module beliebig und ohne räumlichen Bezug zueinander aufgestellt. Dabei werden ergonomische Gestaltungsprinzipien oft nur unvollkommen befolgt.

Aus der EP-A-0 380 082 ist ein Arbeitsplatz eines Warenabrechnungssystems bekannt, der ein Gehäuse, auf dessen Oberseite eine Wägeplatte aufgesetzt ist, eine Anzeigeeinrichtung, eine Eingabeeinrichtung, einen Warenabrechnungscomputer und einen Drucker für Bons und/oder Auszeichnungsetiketten umfaßt. Die vorgenannten Peripheriegeräte sind in dem einzigen Gehäuse in fester Zuordnung zueinander untergebracht.

In der US-A-4 208 081 ist ein Datenerfassungsterminal beschrieben, das aus einem Basisgehäuse und einer Tastatureinheit besteht. Beide können zusammengefügt oder voneinander getrennt betrieben werden. Das Basisgehäuse hat eine Ausnehmung, in der vertikale Führungen und ein Verbindungsstecker angeordnet sind, während an der Tastatureinheit korrespondierende Führungen und ein Gegenstekker vorgesehen sind. Soll die Tastatureinheit getrennt von dem Basisgehäuse betrieben werden, muß ein Zusatzkabel für die elektrische Verbindung beider und eine Abdekkung für die dann offenliegende Ausnehmung eingesetzt werden.

In der EP-A-0 349 997 ist eine Registrierkasse mit einem pultförmigen Gehäuse beschrieben, in das eine Tastatur, eine Anzeigevorrichtung und ein Drucker eingebaut sind. Die Anzeigevorrichtung ist in einem die Pultfläche linsenförmig überragenden Gehäuseteil untergebracht, dessen Vorderseite mit der Tastatur einen stumpfen Winkel einschließt.

Der Wunsch nach anwendungsindividueller Ausstattung bezieht sich auf manuelle Eingabemittel und Anzeigen, Erfassungsgeräte für maschinenlesbare Informationen und physikalische Eigenschaften von Waren. Gewünscht wird aber auch eine Ausstattung mit unterschiedlichen Speicher- und Identifizierungsmedien wie Laufwerke für Disketten oder CD-ROM, Anschlüsse für elektronische, elektrooptische oder elektromechanische Massenspeicher beispielsweise nach dem PCMCIA-Standard sowie Leser für Magnetstreifen- oder Chipkarten, mit denen sich eine Bedienperson oder ein Servicetechniker bei dem Arbeitsplatz identifiziert. Für jede Ausstattungsvariante müßte der Aufbau eines Aufnahmegehäuses verändert werden. Unterschiedliche Aufbauten verteuern aber einen Arbeitsplatz.

Aufgabe der Erfindung ist es daher, einen Peripheriegerätebausatz für den Arbeitsplatz eines Warenabrechnungssystems vorzuschlagen, mit dem ein solcher Arbeitsplatz unterschiedlichen Einsatzbedingungen anzupassen ist.

Die Aufgabe wird durch die Merkmale des Anspruchs 1 gelöst.

Die Erfindung geht von der Überlegung aus, daß ein Selbstbedienungs-Arbeitsplatz wie z.B. eine Selbstbedienungswaage zwar von vielen Personen, von diesen aber nur gelegentlich benutzt wird. Hier müssen die manuellen Eingabemittel und Anzeigen in Lesehöhe des Benutzers und zugleich dicht bei dem Druckgut-Auslaß eines Etikettendrukkers angeordnet sein, damit ein ausgegebenes Etikett dem Benutzer auch ins Auge fällt. Die Waage selbst sollte aber in Tischhöhe aufgestellt sein. Gleiches gilt für Bedienwaagen. Bei einem im Sitzen bedienten Arbeitsplatz wie einer Registrierkasse müssen hingegen die manuellen Eingabemittel und Anzeigen, ein Bondrucker und eine Check Outwaage in einem eng begrenzten Blick- und Greifbereich liegen, um ein ermüdungsfreies Arbeiten während mehrerer Stunden zu ermöglichen.

Die Anordnung der manuellen Eingabemittel und Anzeigen in einer selbständigen Anzeige- und Eingabeeinheit, die wahlweise an eine Waage oder eine Druckerbox angesetzt werden kann, erfüllt die Anforderungen beider oben genannten Arbeitsplatztypen. Dies gilt auch hinsichtlich der wegen ihrer unterschiedlichen Funktionsweise völlig unterschiedlich aufgebauten Etiketten- und Bondrucker, für die aber ein einziger Druckgut-Durchlaß verwendet werden kann.

Die wahlweise Ausstattungsmöglichkeit mit unterschiedlichen Tastaturen oder auch mit einer kombinierten Anzeige/Eingabevorrichtung gestattet nicht nur einen anwendungsspezifischen Aufbau einer Waage für Verkaufsgeschäfte, sondern auch deren einfache nachträgliche Umrüstung, wenn eine Änderung der Anwendung oder neue Eingabegeräte dies erfordern. Beispielsweise eröffnet die Verwendung eines flachen Bildschirms mit einer sogenannten Touch Screen- oder einer PenComputer-Oberfläche oder mit Soft Keys neue Einsatzmöglichkeiten sowohl im bedienten als auch im Selbstbedienungsbereich.

So ermöglicht es die vorliegende Erfindung in einfacher Weise, beispielsweise an einer als Bedienwaage eingesetzten Waage eine schnell zu bedienende Tastatur mit relativ wenigen Tasten und fühlbarem Druckpunkt einzusetzen, die blind zu bedienen ist. Vor einer als Checkoutwaage eingesetzten Waage könnte die Registrierkassentastatur oder eine zu letzterer parallel betreibbare zweite Tastatur mit identischer Tastenausstattung angeordnet sein. An einer Selbstbedienungswaage ist hingegen in besonders vorteilhafter Weise ein Touch Screen einsetzbar, auf dem die angebotenen Waren bildlich dargestellt werden. Eine Identifizierung des Wägeguts erfolgt durch einfache Berührung des entsprechenden Bildes auf dem Bildschirm.

Ähnliche Möglichkeiten einer wahlweisen Ausstattung des Arbeitsplatzes ergeben sich für Speichermittel, die nur sporadisch bedient werden müssen, wie z.B. Diskettenlaufwerke für das Laden von Programmen, CD-ROM-Laufwerke für den Betrieb eines PLU-Speichers, Chipkartenleser für die Bedienpersonen- oder Servicetechniker-Anmeldung, Massenspeicher nach dem PCMCIA-Standard für elektronische Journale, usw.

Ist, wie das als vorteilhafte Weiterbildung der Erfindung vorgeschlagen wird, der Warenabrechnungscomputer in die Basisbox eingebaut und wird die Anzeige- und Bedieneinheit an diese angesetzt, so können die an den Warenabrechnungscomputer angeschlossenen Speichermittel besonders vorteilhaft in der Anzeige- und Bedieneinheit untergebracht werden. Bei einem selbstbedienten Arbeitsplatz genügt hingegen oft ein einziger PLU-Speicher. Für den Einbau der genannten Geräte ist jeweils ein Durchbruch im Gehäuse der Anzeige- und Bedieneinheit vorzusehen, wobei nicht belegte Durchbrüche aus Sicherheitsgründen verschlossen sein sollen. Die Überdeckung dieser Durchbrüche durch den nach unten abgebogenen Bereich der Tastaturfläche erfüllt diese Forderung. Zugleich werden die genannten Geräte dem Zugriff nicht autorisierter Personen entzogen.

An die Basisstation ist eine Trageinrichtung ansetzbar. Diese dient der dazu plazierten Anordnung weiterer Peripheriegeräte, wie z.B. eines von der Seite den Raum oberhalb der Wägeplatte erfassenden Vertikalscanners. Die Trageinrichtung dient zugleich der Abdeckung eines rückseitigen Steckerfeldes der Basisbox. Damit ist eine verdeckte Kabelführung von dort durch hohle Holme der Trageinrichtung zu einem daran befestigten Peripheriegerät möglich. An das obere Ende der Trageinrichtung ist ferner eine Stützeinrichtung mit einer die Basisstation mit Abstand überragenden Tragplatte für die Druckerbox allein oder mit angesetzter Eingabeeinheit ansetzbar. Damit ist eine feste räumliche Zuordnung der Elemente des Periperiegerätebausatzes zueinander sichergestellt.

Nachfolgend wird die Erfindung anhand in der Zeichnung dargestellter Ausführungsbeispiele beschrieben. Die Zeichnung zeigt in
- Figur 1: einen Peripheriegerätebausatz für den Arbeitsplatz eines Warenabrechnungssystems in perspektivischer Explosionsdarstellung,
- Figur 2: die Basisstation aus Figur 1 mit angesetzter Anzeige- und Bedieneinheit in perspektivischer Vorderansicht,
- Figur 3: die Anzeige- und Bedieneinheit aus Figur 2 ohne Tastatur in einer geschnittenen perspektivischen Teilansicht,
- Figur 4: die in Figur 2 gezeigte Anzeige- und Bedieneinheit mit Tastatur in zwei Positionen in einer schematische Seitenansicht,
- Figur 5: ein erstes Ausführungsbeispiel einer Tastaturflächen-Stützvorrichtung in Vorderansicht, (a) in heruntergeklappter, (b) in hochgeschwenkter Position,
- Figur 6: ein zweites Ausführungsbeispiel einer Tastaturflächen-Stützvorrichtung in geschnittener Seitenansicht, (a) in heruntergeklappter, (b) in hochgeschwenkter Position,
- Figur 7: eine Verriegelungseinrichtung für eine Tastaturfläche in schematischer Seitenansicht.

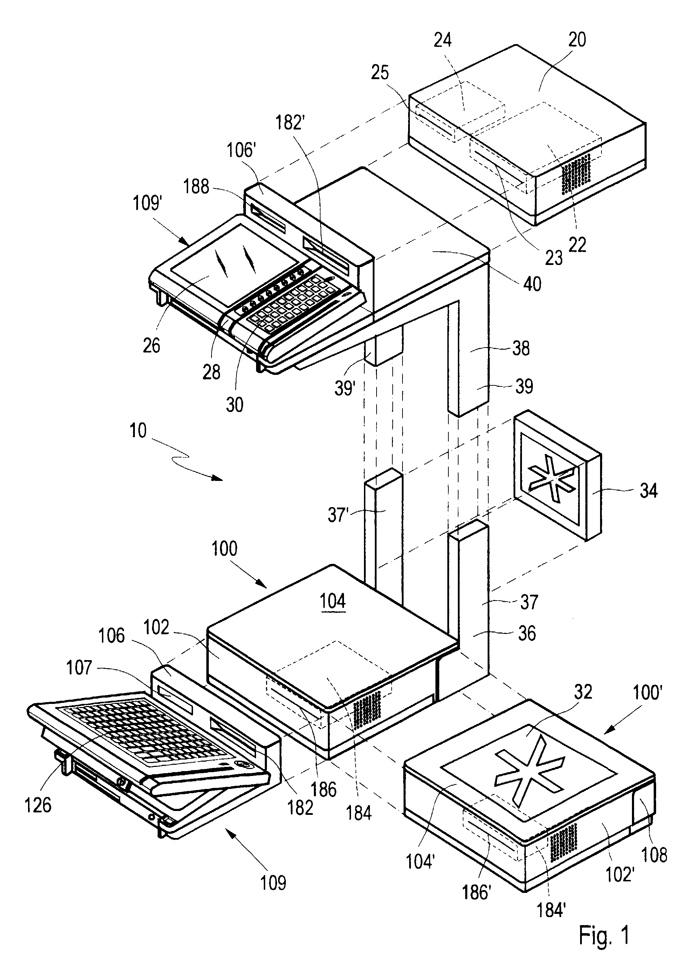

In Figur 1 ist ein Peripheriegerätebausatz für den Arbeitsplatz eines Warenabrechnungssystems allgemein mit 10 bezeichnet. Er umfaßt eine Druckerbox 20, einen Vertikalscanner 34, eine Trageinrichtung 36, eine Stützeinrichtung 38 eine Basisstation 100 mit einer Basisbox 102 und einer Wägeplatte 104 oder einer Wägeplatte 104', in die das Fenster 32 eines Strichkodelesers eingelassen ist, sowie eine Anzeige- und Bedieneinheit 109.

Hinter der Vorderwand der quaderförmigen Druckerbox 20 ist ein Bondrucker 22 mit einem die Vorderwand durchdringenden Druckgut-Auslaß 23 und ein Etikettendrucker 24 mit einem die Vorderwand der Druckerbox 20 durchdringenden Druckgut-Auslaß 25 eingebaut. Je nach Einsatzfall des Arbeitsplatzes kann auch nur einer von beiden Druckern in die Druckerbox 20 eingebaut sein.

Die Trageinrichtung 36 kann an die Hinterseite der Basisbox 102 angesetzt werden. Sie besteht aus zwei zueinander parallelen aufrechten Holmen 37, 37' die auf der Rückseite der Basisbox 102 durch einen nicht sichtbaren Querriegel miteinander verbunden sind. Zwischen diesen ist der Vertikalscanner 34 befestigbar. Auf die Holme 37, 37' kann die Trageinrichtung 38 aufgesetzt werden. Diese umfaßt eine horizontale Aufstellfläche 40 für die Druckerbox 20, an die in einer Konfigurationsvariante eine Anzeige- und Bedieneinheit 109' angesetzt sein kann. Unten an die Aufstellfläche 40 sind zweite Holme 39, 39' angeformt, die oben an die Holme 37, 37' der Trageinrichtung 36 ansetzbar sind.

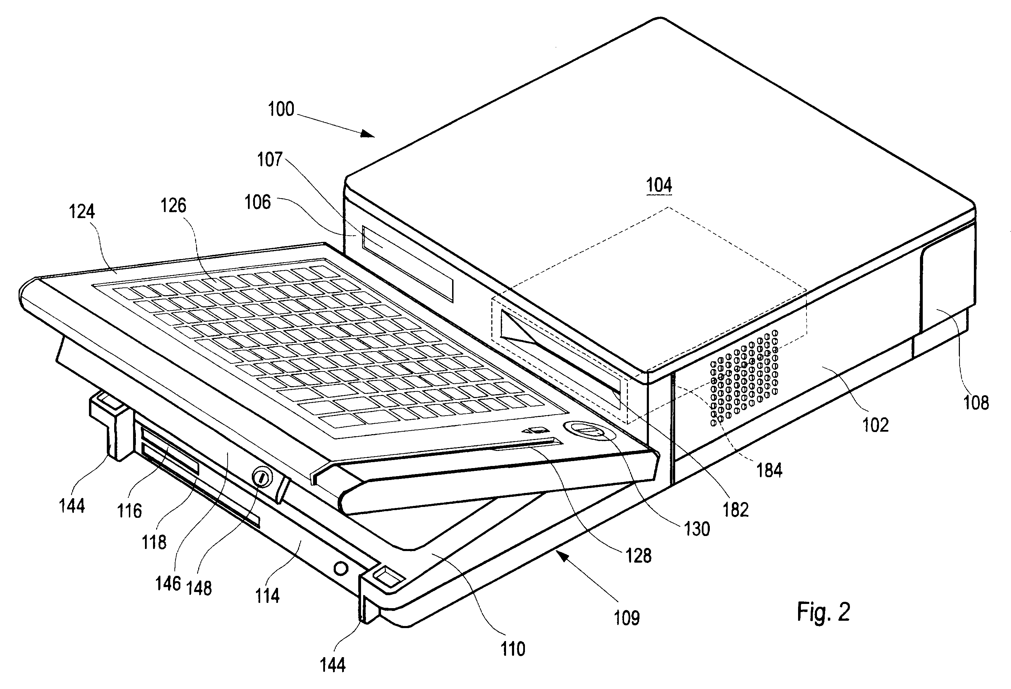

In Figur 2 ist die Basisstation 100 in perspektivischer Vorderansicht dargestellt. Diese besteht aus der Basisbox 102, auf deren Oberseite die Wägeplatte 104 aufgesetzt ist. In die Basisbox 102 ist ein Drucker 184 mit einem die Vorderwand der Basisbox 102 durchdringenden Druckgut-Auslaß 186 eingebaut. Ein im hinteren Bereich der Basisbox 102 liegendes nicht sichtbares Steckerfeld ist durch eine lösbare Kabelabdeckung 108 verschlossen. Wie oben beschrieben kann statt der Kabelabdeckung 108 an der Basisbox 102 auch die Trageinrichtung 36 befestigt werden (Figur 1), deren Querriegel dann das Steckerfeld überdeckt. Durch die hohlen Holme 37, 37', 39, 39' können die elektrischen Anschlußleitungen der Druckerbox 20, der Anzeige- und Bedieneinheit 109' und des Vertikalscanners 34 unsichtbar zum Steckerfeld der Basisbox 102 geführt werden.

An die Vorderseite der Basisbox 102 ist die Anzeige- und Bedieneinheit 109 angesetzt. Eine einem Benutzer zugekehrte Informationswand 106 der Anzeige- und Bedieneinheit 109 ist mit einer einklipsbaren Anzeigevorrichtung 107 bestückt. Neben dieser ist ein Druckgut-Durchlaß 182 in die Informationswand 106 eingelassen, der mit dem Druckgut-Auslaß 186 des Druckers 184 fluchtet.

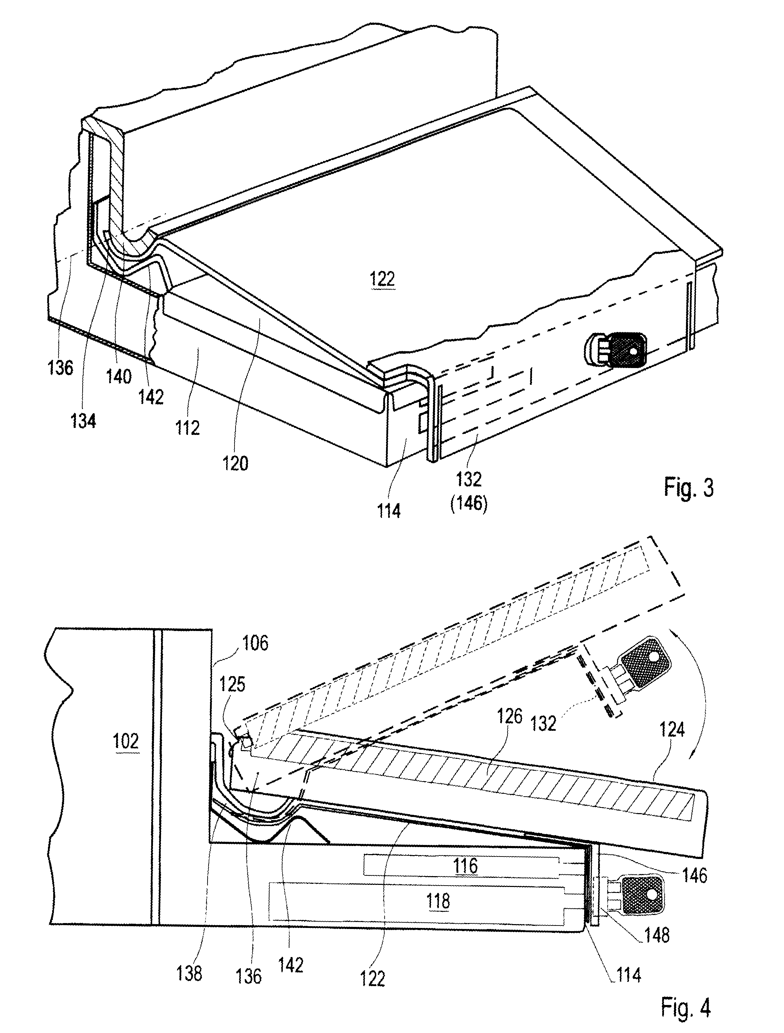

Wie Figur 3 zeigt, fällt die Oberseite 110 der Anzeige- und Bedieneinheit 109 schräg nach vorne ab. Die Anzeige- und Bedieneinheit 109 umschließt ein Gehäuse 112 aus Metall, in dessen senkrecht abfallende Vorderwand 114 ein Chipkartenleser 116 und ein Diskettenlaufwerk 118 eingebaut sind. Die Oberseite des Gehäuses 112 bildet ein Deckblech 120, über dem eine ebenfalls aus Blech gefertigte Tastaturfläche 122 schwenkbar angeordnet ist. Auf dieser ist ein Tastaturgehäuse 124 befestigt, in dem eine Tastatur 126, ein Durchzug-Magnetkartenleser 128 und ein Serviceschloß 130 untergebracht sind. Letzteres ist mit einer an sich bekannten und deshalb nicht dargestellten Schalteinrichtung verbunden, die in einer Servicestellung einen Mitarbeiter oder beauftragten Servicetechniker des Verkaufsgeschäftes gegenüber einer ebenfalls nicht dargestellten Steuereinrichtung des Arbeitsplatzes identifiziert.

Ein vorderer, das Gehäuse 112 überragender Bereich 132 der Tastaturfläche 122 ist nach unten abgebogen, so daß er vor der Vorderwand 114 des Gehäuses 112 zu liegen kommt und diese vollständig überdeckt. Der hintere Bereich der Tastaturfläche 122 ist nach unten zu einer über deren gesamte Breite verlaufenden Kehle 134 mit kreisabschnittförmigem Querschnitt gebogen. Die Mittellinie der Kehle 134 fällt mit einer Schwenkachse 136 zusammen, um die die Tastaturfläche 122 schwenkbar ist. Die Kehle 134 wird in einem Spalt 138 zwischen dem Deckblech 120 und einer an die Informationswand 106 angeformten Rippe 140 geführt, deren Berührungsfläche mit der Tastaturfläche 122 an die Kreisabschnittsform der Kehle 134 angepaßt ist. Im Berührungsbereich der Kehle 134 kann das Deckblech 120 eben sein. Eine noch bessere Führung der Schwenkbewegung der Tastaturfläche 122 um die Schwenkachse 136 ergibt sich aber, wenn das Deckblech 120 in diesem Bereich zu einer Welle 142 geformt ist (Figuren 3 und 4). Die Kehle 134 liegt dabei in einem Wellental. Zwischen der Tastaturfläche 122 und dem Deckblech 120 besteht in jeder Schwenkposition ein großflächiger galvanischer Kontakt, so daß die Verbindung der Tastaturfläche 122 mit dem Massepotential des Gehäuses 112 stets gewährleistet ist.

Figur 4 zeigt die Tastaturfläche 122 mitsamt dem auf ihr befestigten Tastaturgehäuse 124 in einer mit durchgezogenen Linien dargestellten heruntergeklappten Position und einer gestrichelt dargestellten hochgeschwenkten Position. Der vordere Bereich 132 der Tastaturfläche 122 überdeckt in der erstgenannten Position die Vorderwand 114 und verhindert damit den Zugriff zu dem in diese eingebauten Chipkartenleser 116 und zu dem Diskettenlaufwerk 118. Figur 4 zeigt ferner, daß die Schwenkachse 136 der Tastaturfläche 122 so weit vor der Informationswand 106 liegt, daß die Hinterkante 125 des Tastaturgehäuses 124 in keiner Position mit der Informationswand 106 oder mit in diese eingebauten Elementen kollidiert.

Der vordere Bereich 132 der -heruntergeklappten- Tastaturfläche 122 liegt zwischen Vorsprüngen 144, die vorne an den Vorbau 102 angeformt sind (Figur 2). Eine auf den vorderen Bereich 132 aufgesetzte Blende 146 (Figur 4) schließt nach vorne bündig mit den Vorsprüngen 144 ab, so daß sich ein Gerät ohne störende Versprünge ergibt. In die Blende 146 ist ein auch den vorderen Bereich 132 der Tastaturfläche 122 durchsetzendes Schloß 148 eingebaut, mit dem die Tastaturfläche 122 mit der Vorderwand 114 zusammenschließbar ist. Ein unbefugter Zugriff auf den Chipkartenleser 116 oder das Diskettenlaufwerk 118 ist damit zuverlässig zu verhindern.

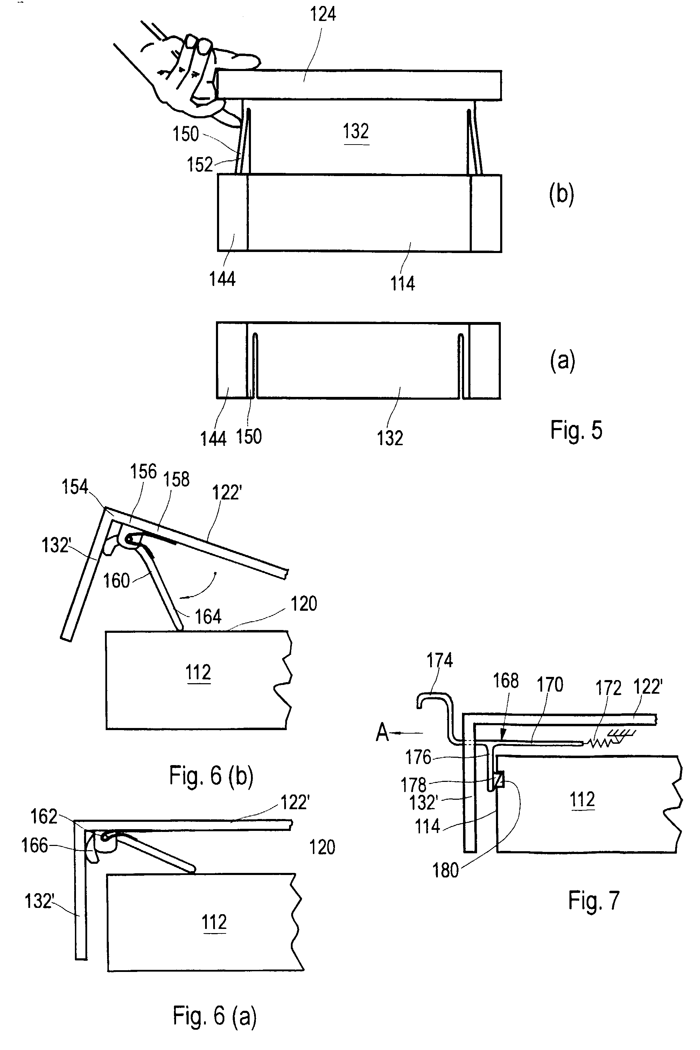

In den Figuren 4 und 5 sind zwei unterschiedliche Ausführungsbeispiele einer Stützeinrichtung für die Tastaturfläche 122 dargestellt. Durch diese wird einerseits die Tastaturfläche 122 in ihrer hochgeschwenkten Position gehalten, so daß in die Vorderwand 114 des Gehäuses 112 eingebaute Geräte -in dem Ausführungsbeispiel nach Figur 1 sind dies der Chipkartenleser 116 und das Diskettenlaufwerk 118- bequem bedient werden können. Andererseits wird beim Herunterklappen ein hartes Aufschlagen der Tastaturfläche 122 auf das Gehäuse 112, welches z.B. zur Zerstörung eines ebenfalls in das Gehäuse 112 eingebauten Magnetplattenlaufwerks führen könnte, vermieden.

Figur 5 zeigt ein erstes Ausführungsbeispiel einer Stützvorrichtung für die Tastaturfläche 122 (a) in heruntergeklappter, und (b) in hochgeschwenkter Position. An die Seitenkanten des vorderen, abgebogenen Bereichs 132 der Tastaturfläche 122 ist jeweils eine unter einem Winkel von ca. 10° schräg zur Seite abstehende Stütze 150 angeformt. Bei hochgeklappter Tastaturfläche 122 stützt sich deren unteres Ende 152 auf dem benachbarten Vorsprung 144 ab. Zum Herunterklappen der Tastaturfläche 122 hat die Bedienperson mit beiden Händen (in Figur 5b für eine Seite dargestellt) das darauf befestigte Tastaturgehäuse 124 seitlich zu ergreifen und mit einem freien Finger die Stützen 150 aufeinander zu zu drücken, bis diese parallel zu dem benachbarten Vorsprung 144 ausgerichtet sind. Danach kann die Tastaturfläche 122 nach unten geführt werden. Die Stützen 150 gleiten beim Herunterschwenken an den Vorsprüngen 144 unter einem erhöhten Reibungswiderstand entlang, der sich unter der Wirkung einer elastischen Rückstellkraft der seitlich gebogenen Stützen einstellt. Dadurch ist ein stoßarmer Übergang der Tastaturfläche 122 von der hochgeschwenkten in die heruntergeklappte Position (Figur 5a) gewährleistet.

Figur 6 zeigt ein zweites Ausführungsbeispiel einer Stützvorrichtung für eine Tastaturfläche 122' (a) in heruntergeklappter, und (b) in hochgeschwenkter Position. An die dem Gehäuse 112 zugewandte Seite der Tastaturfläche 122' ist in der Nähe der Biegekante 154, um welche der vordere Bereich 132' der Tastaturfläche 122' nach unten abgebogen ist, rechts und links eine Lasche 156 angeformt. An diesen ist jeweils ein in Richtung des Gehäuses 112 mit der Kraft einer Schenkelfeder 158 beaufschlagter zweiarmiger Stützhebel 160 gelagert, welcher um eine parallel zu der Schwenkachse 136 der Tastaturfläche 122' ausgerichtete Achse 162 schwenkbar ist. Ein erster Schenkel 164 des Stützhebels 160 stützt sich auf dem Deckblech 120 des Gehäuses 112 ab, der zweite Schenkel 166 ist nach unten abgebogen. Die Schenkel 164, 166 schließen einen Winkel von ca. 60° ein.

In ihrer heruntergeklappten Position (Figur 6a) wird die Tastaturfläche 122' von einer weiter unten beschriebenen Verriegelung 168 (Figur 7) gehalten. Wird diese Verriegelung gelöst, richtet sich der Stützhebel 160 unter der Antriebskraft der Schenkelfeder 158 auf und bringt dabei die Tastaturfläche 122' in ihre hochgeschwenkte Position (Figur 6b), ohne daß diese von Hand angehoben werden müßte. In dieser Stellung stützt sich der zweite Schenkel 166 an dem vorderen Bereich 132' der Tastaturfläche 122' ab und begrenzt damit den Schwenkbereich des Stützhebels 160. Zum Herunterklappen wird die Tastaturfläche 122' manuell nach unten gedrückt. Das untere Ende des ersten Stützhebel-Schenkels 164 gleitet dabei unter gleichzeitiger Spannung der Schenkelfeder 158 auf dem Deckblech 120 entlang. Diese Anordnung gewährleistet wie bei dem Ausführungsbeispiel der Stützvorrichtung nach Figur 5 ebenfalls einen stoßarmen Übergang der Tastaturfläche 122' von der hochgeschwenkten in die heruntergeklappte Position (Figur 6a). Sie hat darüber hinaus den Vorteil einhändiger Bedienbarkeit.

Figur 7 zeigt die Verriegelung 168 für die Tastaturfläche 122' in geschnittener Seitenansicht. Sie enthält auf der dem Gehäuse 112 zugewandten Seite der Tastaturfläche 122' einen parallel zu dieser ausgerichteten längsverschieblichen Schieber 170. Der Schieber 170 durchdringt den vorderen Bereich 132' der Tastaturfläche 122', wo er mit einer Handhabe 174 versehen ist. Auf der Innenseite des vorderen Bereichs 132' ist an den Schieber 170 eine nach unten weisende Zunge 176 angeformt, an deren unterem Ende ein hakenförmiger Rastvorsprung 178 ausgebildet ist. Dieser greift in seiner Verriegelungsstellung in eine Rastausnehmung 180 in der Vorderwand 114 des Gehäuses 112 ein. Der Schieber 170 ist mit einer in Richtung des Gehäuses 112 gerichteten Stellkraft einer Zugfeder 172 beaufschlagt. Zum Entriegeln wird der Schieber 170 in Richtung des Pfeils A bewegt. Der Rastvorsprung 178 kommt außer Eingriff mit der Rastausnehmung 180 und die Tastaturfläche kann nach oben schwingen.

Bei der in Figur 1 oben dargestellten Anzeige- und Bedieneinheit 109' handelt es sich nicht um eine zweite zu dem Peripheriegerätebausatz 10 gehörige Anzeige- und Bedieneinheit. Es handelt sich vielmehr um dieselbe Anzeige- und Bedieneinheit wie vorbeschrieben, wobei die Tastaturfläche 122 mit einem flachen Bildschirm 26 und einer Tastatur 30 mit wenigen Tasten bestückt ist. Der Bildschirm kann als Touch Screen ausgebildet sein. Es kann an dessen Rand aber auch eine Leiste 28 mit frei programmierbaren Tasten, sogenannten Soft Keys, angeordnet sein, wie dies in Figur 1 gezeigt ist. In dieser Ausstattungsvariante ist die Anzeigevorrichtung 107 durch einen weiteren, einklipsbaren Druckgut-Durchlaß 188 ersetzt, der mit dem Druckgut-Auslaß 25 des Etikettendruckers 24 fluchtet.

Ebenso handelt es sich bei der in Figur 1 dargestellten Basisstation 100' nicht um eine zweite zu dem Peripheriegerätebausatz 10 gehörige Basisstation. Diese soll vielmehr lediglich eine Ausstattungsvariante der Basisstation 100 mit einer Wägeplatte 104 verdeutlichen, in die das Fenster 32 eines Strichkodelesers eingebaut ist. Die Indizes an den Bezugszeichen dienen lediglich der besseren Verständlichkeit der Beschreibung.

## Patentansprüche

1. Arbeitsplatz eines Warenabrechnungssystems, umfassend eine Basisbox (102), auf deren Oberseite eine Wägeplatte (104) aufgesetzt ist, eine Anzeigeeinrichtung (26; 107), eine Eingabeeinrichtung (30; 126), einen Warenabrechnungscomputer und wenigstens einen Drucker (22, 24, 184, 184') für Bons und/oder Auszeichnungsetiketten,
**dadurch gekennzeichnet,**
daß der wenigstens eine Drucker (22, 24; 184, 184') in eine Druckerbox (20) oder in die Basisbox (102, 102') eingebaut ist,
daß eine Anzeige- und Bedieneinheit (109, 109'), in die die Anzeigeeinrichtung (26; 107) und die Eingabeeinrichtung (30; 126) eingebaut sind und die einen Druckgut-Durchlaß (182'; 182) aufweist, wahlweise bei in die Druckerbox (20) eingebautem Drucker (22, 24) an die Druckerbox (20) oder bei in die Basisbox (102; 102') eingebautem Drucker (184; 184') an die Basisbox (102; 102') angesetzt ist,
daß die Druckerbox (20) und die Basisbox (102; 102') gleiche, den Abmessungen einer Hinterwand der Anzeige- und Bedieneinheit (109'; 109) entsprechende Frontflächen-Abmessungen und einen mit dem Druckgut-Durchlaß (182'; 182) fluchtenden Druckgut-Auslaß (23; 186, 186') aufweisen
und daß bei Verwendung einer Druckerbox (20) diese zusammen mit der an sie angesetzten Anzeige- und Bedieneinheit (109') auf einer Stützeinrichtung (38, 40) aufgestellt ist, die auf eine an der Hinterseite der Basisbox (102, 102') angebrachte, diese nach oben überragende Trageinrichtung (36) aufgesetzt ist.

2. Arbeitsplatz nach Anspruch 1, dessen Anzeige- und Bedieneinheit (109, 109'), im Seitenprofil winkelförmig ist, wobei
die Schenkel einen rechten bis stumpfen Winkel einschließen,
der eine Schenkel eine mit wenigstens einer Tastatur (28, 30, 126) oder einer kombinierten Anzeige/Eingabevorrichtung ausstattbare pultförmige Tastaturfläche (122) aufweist,
der andere Schenkel eine die hintere, von einem Benutzer wegweisende Kante der wenigstens einen Tastatur (28, 30, 126) oder der kombinierten Anzeige/Eingabevorrichtung überragende Informationswand (106) mit einer Anzeigevorrichtung (107) und/oder wenigstens einem Druckgut-Durchlaß (182, 182', 188) ist.

3. Arbeitsplatz nach Anspruch 1 oder 2, bei dem der Warenabrechnungscomputer in die Basisbox (102, 102') eingebaut ist.

4. Arbeitsplatz nach einem der Ansprüche 1 bis 3, bei dem die Basisbox (102; 102') von einer Wägeplatte (104') mit darin eingebautem Scannerfenster (32) eines Strichkodelesers überdeckt ist.

5. Arbeitsplatz nach einem der Ansprüche 1 bis 4, bei dem ein rückseitiges Steckerfeld der Basisbox (102, 102') durch eine lösbare Kabelabdeckung (108) überdeckt ist.

6. Arbeitsplatz nach einem der Ansprüche 1 bis 5, bei der die Trageinrichtung (36) ein rückseitiges Stekkerfeld der Basisbox (102) überdeckt.

7. Arbeitsplatz nach einem der Ansprüche 1 bis 6, bei dem an der Trageinrichtung (36) ein Vertikalscanner (34) so angebracht ist, daß dessen Hauptabtastrichtung einen über der Basisbox (102) liegenden Bereich erfaßt.

8. Arbeitsplatz nach einem der Ansprüche 2 bis 7, bei dem die Anzeige- und Eingabeeinheit (109) mit einem unterhalb der Tastaturfläche (122) liegenden Gehäuses (112) ausgestattet ist, in dessen senkrechte Vorderwand (114) wenigstens ein Chipkartenleser (116) und/oder ein Ausweisleser und/oder ein Diskettenlaufwerk (118) und/oder ein Laufwerk für optische Speichermedien und/oder eine Kärtenaufnahme nach dem PCMCIA-Standard einbaubar ist,
ein vorderer Bereich (132) der Tastaturfläche (122) nach unten abgebogen ist,
die Tastaturfläche (122) an der Anzeige- und Eingabeeinheit (109) um eine bei ihrer Hinterkante und parallel zu dieser verlaufende Schwenkachse (136) zwischen einer Position, in der deren vorderer, abgebogener Bereich (132) die senkrechte Vorderwand (114) übergreift, und einer diese freigebenden Position schwenkbar gelagert ist.

9. Arbeitsplatz nach Anspruch 8, bei dem der vordere, nach unten abgebogene Bereich (132) bei heruntergeklappter Tastaturfläche (122) zwischen Vorsprüngen (144) liegt, die die Vorderwand (114) seitlich begrenzen.

10. Arbeitsplatz nach Anspruch 9, bei dem wenigstens an eine Seitenkante des vorderen, abgebogenen Bereichs (132) der Tastaturfläche (122) eine bei heruntergeklappter Tastaturfläche (122) parallel zu dem benachbarten Vorsprung (144) verlaufende Stütze (150) angeordnet ist, die sich bei hochgeklappter Tastaturfläche (122) unter der Wirkung einer elastischen Federkraft seitlich von dem abgebogenen Bereich (132) abspreizt, wonach sich deren unteres Ende auf dem benachbarten Vorsprung (144) abstützt.

11. Arbeitsplatz nach Anspruch 8 oder 9, bei dem an die Unterseite der Tastaturfläche (122) wenigstens ein in Richtung des Gehäuses (112) mit der Kraft einer Feder (158) beaufschlagter Stützhebel (160) angelenkt ist, welcher um eine parallel zu der Schwenkachse (136) der Tastaturfläche (122) ausgerichtete Achse (162) schwenkbar ist, und dessen einer Schenkel (164) sich auf dem Deckblech (120) des Gehäuses (112) abstützt.

12. Arbeitsplatz nach einem der Ansprüche 8 bis 11, bei dem die Tastaturfläche (122) in ihrer heruntergeklappten Position mit dem Gehäuse (112) verrastbar oder auch abschließbar ist.

13. Arbeitsplatz nach einem der Ansprüche 8 bis 12, bei dem die Schwenkachse (136) der Tastaturfläche (122) in einer solchen Entfernung von der Informationswand (106) angeordnet ist, daß die Hinterkante (125) eines die Tastaturfläche (122) überragenden Tastaturgehäuses (124) bei hochgeklappter Tastaturfläche (122) nicht mit der Informationswand (106) oder mit einer in diese einegebauten Anzeigevorrichtung (107) oder einem in die Informationswand (106) eingebauten Druckgut-Durchlaß (182) kollidiert.

14. Arbeitsplatz nach Anspruch 13, bei dem die Tastaturfläche (122) aus Blech gefertigt und um die Schwenkachse (136) zu einer kreisabschnittförmigen Kehle (134) gebogen ist, wobei letztere in einem Spalt (138) verschwenkbar geführt ist, der zwischen dem Deckblech (120) des Gehäuses (112) und einer an den Vorbau (109) angeformten Rippe (140) ausgebildet ist.

## Claims

1. Workstation of a goods invoicing system, comprising a base box (102) with a weighing plate (104) mounted on its top side, a display device (26; 107), an input device (30; 126), a goods invoicing computer and at least one printer (22, 24, 184, 184') for cash register slips and/or price labels, characterized in that the at least one printer (22, 24; 184, 184') is installed in a printer box (20) or in the base box (102, 102'),
in that a display and operating unit (109, 109') incorporating the display device (26; 107) and the input device (30; 126) and having an opening (182'; 182) for printed matter is mounted either on the printer box (20), when the printer (22, 24) is installed in the printer box (20), or on the base box (102; 102'), when the printer (184; 184') is installed in the base box (102; 102'),
in that the printer box (20) and the base box (102; 102') have equal front face dimensions corresponding to the dimensions of a rear panel of the display and operating unit (109'; 109), and have an exit point (23; 186, 186') for printed matter which is aligned with the opening (182'; 182) for printed matter,
and in that, when a printer box (20) is used, it is mounted, together with the display and operating unit (109') fitted to it, on a supporting fixture (38, 40) which is mounted on a bearing fixture (36) fitted to the rear side of the base box (102, 102') and projecting upwards beyond the latter.

2. Workstation according to Claim 1, whose display and operating unit (109, 109') has an angled side profile,
the limbs forming a right to obtuse angle,
one limb having a console-type keypad surface (122) which can be equipped with at least one keypad (28, 30, 126) or a combined display/input device,
the other limb being an information panel (106) which protrudes beyond the rear edge, pointing away from a user, of the at least one keypad (28, 30, 126) or the combined display/input device and has a display device (107) and/or at least one opening (182, 182', 188) for printed matter.

3. Workstation according to Claim 1 or 2, in which the goods invoicing computer is installed in the base box (102, 102').

4. Workstation according to one of Claims 1 to 3, in which the base box (102; 102') is covered by a weighing plate (104') having an integrated scanner window (32) for a bar code reader.

5. Workstation according to one of Claims 1 to 4, in which a plug panel at the back of the base box (102, 102') is covered by a removable cable cover (108).

6. Workstation according to one of Claims 1 to 5, in which the bearing fixture (36) covers a plug panel at the back of the base box (102).

7. Workstation according to one of Claims 1 to 6, in which a vertical scanner (34) is mounted on the bearing fixture (36) such that its main scanning direction includes an area lying above the base box (102).

8. Workstation according to one of Claims 2 to 7, in which the display and input unit (109) is equipped with a casing (112) which is located beneath the keypad surface (122) and whose vertical front panel (114) can contain at least one chip card reader (116) and/or a pass reader and/or a floppy disk drive (118) and/or a drive for optical storage media and/or a card holder complying with the PCMCIA standard,
a front area (132) of the keypad surface (122) is bent downwards,
the keypad surface (122) is mounted on the display and input unit (109) such that it can pivot about a pivot axis (136), running at and parallel to its rear edge, between a position in which its front area (132), which is bent away, engages over the vertical front panel (114) and a position which releases the latter.

9. Workstation according to Claim 8, in which the front area (132), which is bent downwards, is located between projections (144) when the keypad surface (122) is in the lowered position, said projections delimiting the front panel (114) at the sides.

10. Workstation according to Claim 9, in which, at least at one side edge of the front area (132), which is bent away, of the keypad surface (122), a support (150) is arranged which runs parallel to the adjacent projection (144) when the keypad surface (122) is in the lowered position and which, when the keypad surface (122) is in the raised position, extends laterally, under the action of an elastic spring force, from the area (132) which is bent away, its lower end then being supported on the adjacent projection (144).

11. Workstation according to Claim 8 or 9, in which at least one support lever (160), which is acted upon by the force of a spring (158) in the direction of the casing (112), can be pivoted about a spindle (162) oriented parallel to the pivot axis (136) of the keypad surface (122), and whose one limb (164) is supported on the cover plate (120) of the casing (112), is articulated to the underside of the keypad surface (122).

12. Workstation according to one of Claims 8 to 11, in which the keypad surface (122) can be latched or even locked to the casing (112) when said keypad surface is in its lowered position.

13. Workstation according to one of Claims 8 to 12, in which the pivot axis (136) of the keypad surface (122) is arranged at such a distance from the information panel (106) that the rear edge (125) of a keypad casing (124) protruding beyond the keypad surface (122) does not collide with the information panel (106) or with a display device (107) incorporated therein or an opening (182) for printed matter incorporated in the information panel (106) when the keypad surface (122) is in the raised position.

14. Workstation according to Claim 13, in which the keypad surface (122) is produced from sheet metal and is bent around the pivot axis (136) to form a channel (134) in the form of a segment of a circle, said channel being guided such that it can pivot in a gap (138) which is formed between the cover plate (120) of the casing (112) and a rib (140) integrally formed on the forepart (109).

## Revendications

1. Poste de travail d'un système de comptabilisation de marchandises, comprenant une boîte (102) de base sur la face supérieure de laquelle est posé un plateau (104) de pesage, un dispositif (26 ; 107) d'affichage, un dispositif (30 ; 126) d'entrée de données, un ordinateur de comptabilisation de marchandises et au moins une imprimante (22, 24, 184, 184') pour des bons et/ou des étiquettes d'indication de prix,
caractérisé en ce que
la au moins une imprimante (22, 24 ; 184, 184') est montée dans une boîte (20) d'imprimante ou dans la boîte (102, 102') de base,
une unité (109, 109') d'affichage et de commande, dans laquelle sont montés le dispositif (26 ; 107) d'affichage et le dispositif (30 ; 126) d'entrée de données et qui comporte un dispositif (182' ; 182) de transport d'imprimés, est rattachée au choix à la boîte (20) d'imprimante dans le cas où l'imprimante (22, 24) est montée dans la boîte (20) d'imprimante ou à la boîte (102 ; 102') de base dans le cas où l'imprimante (184, 184') est montée dans la boîte (102 ; 102') de base,
la boîte (20) d'imprimante et la boîte (102 ; 102') de base ont des dimensions de surface frontale identiques, correspondant aux dimensions d'une paroi arrière de l'unité (109' ; 109) d'affichage et de commande et ont une sortie (23 ; 186, 186') d'imprimés en alignement avec le dispositif (182' ; 182) de transport d'imprimés
et, lorsque l'on utilise une boîte (20) d'imprimante, celle-ci est placée, conjointement avec l'unité (109') d'affichage et de commande qui est rattachée, sur un dispositif (38, 40) de soutien, qui est posé sur un dispositif (36) de support monté sur la face arrière de la boîte (102, 102') de base et en en faisant saillie vers le haut.

2. Poste de travail suivant la revendication 1, dont l'unité (109, 109') d'affichage et de commande est en profil latéral de forme angulaire,
les branches formant un angle droit à obtus,
l'une des branches comportant une surface (122) pour clavier en forme de pupitre pouvant être muni d'au moins un clavier (28, 30, 126) ou d'un dispositif combiné affichage/entrée,
- l'autre branche étant un panneau (106) arrière d'information faisant saillie d'un bord éloigné de l'utilisateur du au moins un clavier (28, 30, 126) ou du dispositif combiné affichage/entrée et comportant un dispositif (107) d'affichage et/ou au moins un dispositif (182, 182', 188) de transport d'imprimés.

3. Poste de travail suivant la revendication 1 ou 2, dans lequel l'ordinateur de comptabilisation de marchandises est monté dans la boîte (102, 102') de base.

4. Poste de travail suivant l'une des revendications 1 à 3, dans lequel la boîte (102 ; 102') de base est recouverte d'un plateau (104') de pesage comportant une fenêtre (32) de scanner d'un lecteur de code à barres qui y est intégré.

5. Poste de travail suivant l'une des revendications 1 à 4, dans lequel une zone de prise située sur la face arrière de la boîte (102, 102') de base est recouverte par un couvercle (108) de câble amovible.

6. Poste de travail suivant l'une des revendications 1 à 5, dans lequel le dispositif (36) de support recouvre une zone de prise située sur la face arrière de la boîte (102) de base.

7. Poste de travail suivant l'une des revendications 1 à 6, dans lequel un scanner (34) vertical est monté sur le dispositif (36) de support de telle manière que sa direction de détection principale balaie une zone se trouvant au-dessus de la boîte (102) de base.

8. Poste de travail suivant l'une des revendications 2 à 7, dans lequel l'unité (109) d'affichage et d'entrée est munie d'un boîtier (112) qui se trouve au-dessous de la surface (122) pour clavier et dans la paroi (114) avant verticale duquel peut être installé au moins un lecteur (116) de cartes à puce et/ou un lecteur de badges et/ou une unité (118) de mémoire à disquette et/ou une unité pour des moyens d'enregistrement optique et/ou un récepteur de carte suivant la norme PCMCIA,
dans lequel une zone (132) avant de la surface (122) pour clavier est coudée vers le bas,
dans lequel la surface (122) pour clavier est montée basculante sur l'unité (109) d'affichage et d'entrée par rapport à un axe (136) de basculement s'étendant à proximité de son bord arrière et parallèlement à celui-ci, entre une position en laquelle sa zone (132) avant coudée empiète sur la paroi (114) avant verticale et une position dégageant cette paroi avant.

9. Poste de travail suivant la revendication 8, dans lequel la zone (132) avant coudée vers le bas se trouve, lorsque la surface (122) pour clavier est rabattue vers le bas, entre des parties (144) en saillie qui délimitent latéralement la paroi (114) avant.

10. Poste de travail suivant la revendication 9, dans lequel il est monté sur au moins un grand côté de la zone (132) avant coudée de la surface (122) pour clavier un appui (150) qui s'étend parallèlement à la partie (144) en saillie voisine lorsque la surface (122) pour clavier est rabattue vers le bas et qui, lorsque la surface (122) pour clavier est relevée vers le haut, s'écarte latéralement de la zone (132) coudée sous l'effet d'une force élastique d'un ressort, son extrémité inférieure prenant ensuite appui sur la partie (144) en saillie voisine.

11. Poste de travail suivant la revendication 8 ou 9, dans lequel il est articulé à la face inférieure de la surface (122) pour clavier au moins un levier (160) d'appui qui est chargé en direction du boîtier (112) par la force d'un ressort (158), qui peut basculer par rapport à un axe (162) orienté parallèlement à l'axe (136) de basculement de la surface (122) pour clavier et dont l'une (164) des branches prend appui sur la tôle (120) de recouvrement du boîtier (112).

12. Poste de travail suivant l'une des revendications 8 à 11, dans lequel, en sa position rabattue vers le bas, la surface (122) pour clavier peut être encliquetée avec le boîtier (112) ou aussi fermée par lui.

13. Poste de travail suivant l'une des revendications 8 à 12, dans lequel l'axe (136) de basculement de la surface (122) pour clavier est monté à une distance telle du panneau (106) d'information que le bord (125) arrière d'un boîtier (124) de clavier faisant saillie de la surface (122) pour clavier n'entre pas en collision, lorsque la surface (122) pour clavier est rabattue vers le haut, avec le panneau (106) d'information ou avec un dispositif (107) d'affichage monté dans ce dernier ou avec un dispositif (182) de transport d'imprimés installé dans le panneau (106) d'information.

14. Poste de travail suivant la revendication 13, dans lequel la surface (122) pour clavier est fabriquée en tôle et est coudée par rapport à l'axe (136) de basculement en une gorge (134) en forme d'arc de cercle, cette gorge étant guidée avec possibilité de basculement dans un interstice (138) qui est ménagé entre la tôle (120) de recouvrement du boîtier (112) et une nervure (140) issue de l'avant-corps (109).
